# EUROPEAN PATENT APPLICATION

(11) **EP 4 553 594 A1**
(43) Date of publication of application: **14.05.2025**
(21) Application number: 23306941.8
(22) Date of filing: 09.11.2023
(51) Int. Cl.: G05B 19/404

(54) **METHOD FOR MANUFACTURING AN OPHTHALMIC DEVICE BY MACHINING AND MANUFACTURING SYSTEM CONFIGURED TO CARRY OUT SUCH A METHOD**

(71) Applicant: Essilor International, 94220 Charenton-Le-Pont (FR)
(72) Inventor: BESSONNET, Stephane, 94350 VILLIERS SUR MARNE (FR); MOREL, Florence, 94130 NOGENT SUR MARNE (FR); MOINE, Jerome, 94410 SAINT MAURICE (FR)
(74) Representative: Santarelli

(57) **Abstract**

The disclosure provides a method for manufacturing by machining an ophthalmic device, comprising: providing (101) data representative of at least one desired surface to be machined on the ophthalmic device, at least as a function of an optical power; providing (102) at least one parameter representative of a wear state of at least one location of an edge of a cutting tool configured to machine the at least one desired surface of the ophthalmic device; determining (103)a machining strategy as a function of both the at least one desired surface and the at least one parameter representative of the wear state; the machining strategy being selected between at least one of a first order (103a) to machine the desired surface with the cutting tool and a second order (103b) not to machine the desired surface with the cutting tool.

## Description

### FIELD OF THE DISCLOSURE

The disclosure relates to a method for manufacturing an ophthalmic device by machining and a manufacturing system configured to carry out such a method.

The disclosure also relates to a command and control unit including system elements configured to run a computer program in order to implement at least some steps of the manufacturing method, and to a manufacturing system comprising such a command and control unit and configured for carrying out such a method.

The disclosure also relates to a computer program including instructions configured to implement at least some parts of such a method, when said computer program is run by a computer, and to a client-server communication interface for transferring to a remote computer at least manufacturing data which are determined by a computer program that implements at least some parts of such a method, when said computer program is run in a command and control unit, the remote computer implementing the other parts of such method.

### BACKGROUND ART

It is known to manufacture ophthalmic devices, such as spectacle lenses or a component for obtaining such spectacle lenses, such as a mold, thanks to machining method carried out by a machining system having a machining tool.

Machining may comprise surfacing including at least one of roughing, finishing and/or edging the ophthalmic device in order to obtain at least one desired surface on the ophthalmic device.

The at least one desired surface on the ophthalmic device can be a surface of a lens blank or semi-finished lens blank from which is issued directly the spectacle lens or a mold used for molding a spectacle lens.

The at least one desired surface can bring some desired optical properties defined thanks to a prescription for a wearer of the spectacle lenses.

The prescription can be defined by an optical power design, including an optical power, in diopters, to bring to the spectacle lenses.

Machining uses a cutting tool such as a diamond tool which is configured to contact the ophthalmic device in order to remove material from which is issued the ophthalmic device.

In particular, the cutting tool comprises an edge which defines a plurality of contact points with the ophthalmic device.

It results to a non-equal state of wear along the cutting tool edge depending of the desired surfaced to machine but also on the material and base curvature of the ophthalmic device.

Such a wear of the cutting tool may generate defects on the desired surfaced to machine, representative of power errors.

In this respect, so-called "tool wear compensation" known methods can be used in order to try to compensate the wear of the cutting tool edge during machining.

French patent FR 2 984 197 from the Applicant discloses such a tool wear compensation method. In particular, this patent describes a method related to the correction of surface irregularities introduced in a reproducible manner, the method comprising a step of determining a surface irregularity of the surfaced lens and a transformation step by compensating the surface irregularity of the surfaced lens with means of an irregularity model.

Such a tool wear compensation method takes into account the surface irregularity of the machined surface.

### SUMMARY OF THE DISCLOSURE

The disclosure is directed to a method for manufacturing an ophthalmic device by machining, which is simple and convenient to carry out.

The disclosure accordingly provides a method for manufacturing by machining an ophthalmic device, comprising:
- providing data representative of at least one desired surface to be machined on the ophthalmic device, at least as a function of an optical power;
- providing at least one parameter representative of a wear state of at least one location of an edge of a cutting tool configured to machine the at least one desired surface of the ophthalmic device;
- determining a machining strategy as a function of both the at least one desired surface and the at least one parameter representative of the wear state ;
the machining strategy being selected between at least one of a first order to machine the at least one desired surface with the cutting tool and a second order not to machine the at least one desired surface with the cutting tool.

In other words, thanks to the method according to the disclosure, it is possible to allow or not to allow at least one desired surface to be machined, depending on the at least one parameter of the wear state of at least one location of the edge of the cutting tool, taking into account of the desired surface itself.

The method according to the disclosure can thus be considered as a preventive method which takes into account the desired surface to be machined, the estimate or actual wear state at least one location of the edge of the cutting tool, thanks to at least one dedicated parameter, and a potential negative effect of the machining of the desired surface with the cutting tool.

The preventive role of the method according to the disclosure can be very convenient to manage the machining strategy, as a function of the estimate or actual wear state at least at one location of the edge of the cutting tool in combination with the desired surfaces to be machined.

For instance, it is possible to identify a risk of being out of quality tolerance if one desired surface is machined with the cutting tool while another desired surface to be machine would be in line with the quality tolerance.

Therefore, the method could for instance determine a machining strategy according to which a second order not to machine the one desired surface with the cutting tool would be delivered and a subsequent first order to machine the another desired surface with the cutting tool would be delivered.

In other words, the method according to the disclosure may allow to adapt the ophthalmic devices production in a dedicated plant, such as a lab.

In addition to manage the machining strategy as a function of the quality tolerance, the method according to the disclosure may also be convenient to raise the lifespan of the cutting tool, versus the lab productivity.

Advantageous and convenient features of the manufacturing method are described below.

The at least one parameter representative of the wear state may be a geometrical parameter, and/or a machining electrical parameter, such as electrical power or electrical intensity or electrical energy, and/or a machining vibration parameter.

The at least one parameter representative of the wear state may be obtained by measurement of a waviness on a predetermined reference surface and/or by a number of desired surfaces machined, and/or by electrical measurement of a gradient of a machining power and/or by accelerometer or acoustic measurement of a gradient of machining vibration.

The method may comprise providing at least one error map, such as an optical power error map, characterized at least as a function of both the at least one desired surface and the at least one parameter representative of the wear state and determining the machining strategy as a function of the at least one optical power error map.

As stated above, the at least one error map may be an optical power error map but could be a machining electrical parameter error map, based for instance on the electrical power, electrical intensity, or electrical energy or a gradient thereof, or also a machining vibration parameter error map, based for instance on a vibration power, a vibration amplitude, a vibration shape, a vibration energy, or also a Fourier Transformation or a wavelet transformation.

In other words, it is possible to allow or not to allow at least one desired surface to be machined, depending on both the at least one parameter of the wear state of at least one location of the edge of the cutting tool and of a predictive optical power error, or other more generally a parameter error, that could be generated on the ophthalmic device, taking into account of the desired surface itself.

The potential negative effect of the machining of the desired surface with the cutting tool can thus be represented by defects estimated on the error map.

The risk of being out of quality tolerance if one desired surface is machined with the cutting tool while another desired surface to be machine would be in line with the quality tolerance, can be identified thanks to a comparison of the desired surface to be machined to the error map.

The at least one error map, such as optical power error map, may be representative of a predetermined reference surface and/or a predetermined material index and/or a base curvature, and the at least one error map is characterized by a surface power defect at least at a location corresponding to a center of a predetermined reference surface and/or by a ring defect at least around the center of the predetermined reference surface.

The surface power defect and/or the ring defects may be representative of a part of a global optical power error, including also positioning errors and curvature errors.

The method may comprise providing a plurality of error maps arranged in a machining domain, locating the at least one desired surface to be machined in the machining domain, comparing the at least one desired surface to be machined to a respective predetermined reference surface and determining the machining strategy as a result of the comparison.

The machining domain may include at least one first region defining acceptable error maps and at least one second region defining unacceptable error maps, both first and second regions depending at least of the wear state of at least one location of the edge of the cutting tool.

The at least one first region and the at least one second region may be separated by at least one quality tolerance threshold.

The machining strategy may be determined according to at least one parameter of the ophthalmic device on which the desired surface is to be machined, amongst a material parameter, a curvature parameter, an optical power parameter, a diameter parameter, and a thickness parameter.

The machining strategy may comprise a third order to change the cutting tool and/or a fourth order to select another desired surface to be machined and/or a fifth order to machine the desired surface thanks to a selected machining device amongst a plurality of machining devices, and when the second order is selected, at least one amongst the third, fourth and fifth orders is also selected.

The fourth order to select another desired surface may be on the same ophthalmic device or on another ophthalmic device.

The disclosure also provides, according to a second aspect, a command and control unit including system elements configured to run a computer program in order to manufacture by machining an ophthalmic device, by implementing: providing data representative of at least one desired surface to be machined on the ophthalmic device, at least as a function of an optical power; providing at least one parameter representative of a wear state of at least one location of an edge of a cutting tool configured to machine the at least one desired surface of the ophthalmic device; determining a machining strategy as a function of both the at least one desired surface and the at least one parameter representative of the wear state; the machining strategy being selected between at least one of a first order to machine the at least one desired surface with the cutting tool and a second order not to machine the at least one desired surface with the cutting tool.

The disclosure further provides, according to a third aspect, a manufacturing system comprising at least one machining device having a cutting tool, and a command and control unit, the system being configured for manufacturing by machining an ophthalmic device, by providing data representative of at least one desired surface to be machined on the ophthalmic device, at least as a function of an optical power; providing at least one parameter representative of a wear state of at least one location of an edge of a cutting tool configured to machine the at least one desired surface of the ophthalmic device; determining a machining strategy as a function of both the at least one desired surface and the at least one parameter representative of the wear state; the machining strategy being selected between at least one of a first order to machine the at least one desired surface with the cutting tool and a second order not to machine the at least one desired surface with the cutting tool.

The manufacturing system may comprise a plurality of machining devices and the machining strategy comprises a third order to change the cutting tool and/or a fourth order to select another desired surface to be machined and/or a fifth order to machine the desired surface thanks to a selected machining device amongst the plurality of machining devices, and when the second order is selected, at least one amongst the third, fourth and fifth orders is also selected.

At least one of the machining devices may be configured to machine several desired surfaces simultaneously or sequentially on a single support or on several supports.

The disclosure also provides, according to a fourth aspect, a computer program including instructions configured to manufacture by machining an ophthalmic device, by implementing: providing data representative of at least one desired surface to be machined on the ophthalmic device, at least as a function of an optical power; providing at least one parameter representative of a wear state of at least one location of an edge of a cutting tool configured to machine the at least one desired surface of the ophthalmic device; determining a machining strategy as a function of both the at least one desired surface and the at least one parameter representative of the wear state; the machining strategy being selected between at least one of a first order to machine the at least one desired surface with the cutting tool and a second order not to machine the at least one desired surface with the cutting tool, when said computer program is run by a computer.

The disclosure further provides, according to a fifth aspect, a client-server communication interface for transferring to a remote computer at least manufacturing data for manufacturing by machining an ophthalmic device, such as a file manufacturing including a machining strategy, which are determined by a computer program, when said computer program is run in a command and control unit, which is configured to implement: providing data representative of at least one desired surface to be machined on the ophthalmic device, at least as a function of an optical power; providing at least one parameter representative of a wear state of at least one location of an edge of a cutting tool configured to machine the at least one desired surface of the ophthalmic device; determining a machining strategy as a function of both the at least one desired surface and the at least one parameter representative of the wear state; the machining strategy being selected between at least one of a first order to machine the at least one desired surface with the cutting tool and a second order not to machine the at least one desired surface with the cutting tool, and the remote computer being configured to implement the machining or not according to the machining strategy.

It is to be noted that the method according to the disclosure can be carried out in combination, or sequentially, with a tool wear compensation method taken into account the surface irregularity of the machined surface, such as the method described in French patent FR 2 984 197 from the Applicant, and/or with another tool wear compensation method developed also by the Applicant and which takes into account irregularities of the cutting tool itself due to the non-equal state of wear thereof.

The so-called tool wear compensation methods are "curative" methods whereas the method according to the present disclosure is a "preventive" method, thus allowing to carry out an accurate solution for managing both the cutting tool lifetime and the ophthalmic devices production workflow.

### BRIEF DESCRIPTION OF THE DRAWINGS

The description of the disclosure now continues with a detailed description of embodiments given hereinafter by way of non-limiting example and with reference to the appended drawings.
Figure 1 is a schematic view of a manufacturing system configured to carry out a method for manufacturing ophthalmic devices by machining.
Figure 2 diagrammatically shows a client-server communication interface comprising system parts configured for transferring at least one configuration parameter determined by the method according to the disclosure to a remote data processing system.
Figure 3 partially and schematically depicts a cutting tool of the manufacturing system illustrated on Figure 1, which faces an ophthalmic device to be machined.
Figure 4 partially and schematically depicts two different contact angles corresponding to locations on an edge of the cutting tool illustrated on Figure 3.
Figure 5 shows a multi-dimensional graphical representation of an optical surface power error generated by the cutting tool on a predetermined reference surface at one location of the edge of the cutting tool, depending on a determined wear state of the cutting tool.
Figure 6 is a block diagram illustrating operating steps of the method for manufacturing an ophthalmic device according to the disclosure and thanks to the manufacturing system and/or to the client-server communication interface illustrated on Figures 1 and 2.
Figure 7 is a block diagram illustrating more detailed operating steps of the method for manufacturing an ophthalmic device illustrated on Figure 6, according to a first embodiment.
Figure 8 is a block diagram illustrating more detailed operating steps of the method for manufacturing an ophthalmic device illustrated on Figure 6, according to a second embodiment.
Figure 9 shows a multi-dimensional graphical representation of a machining domain comprising a plurality of optical power error maps corresponding each to a parameter representative of a wear state at one location of the edge of the cutting tool, obtained by measurement of a waviness on a predetermined reference surface, and a quality tolerance threshold separating a first acceptable region and a second unacceptable region.
Figure 10 shows a multi-dimensional graphical representation of another parameter representative of a wear state at one location of the edge of the cutting tool obtained, by an accelerometer measurement of a gradient of machining vibration.
Figure 11 shows a correspondence between the accelerometer measurement of a gradient of machining vibration illustrated on Figure 10 and power error on an ophthalmic device machined.
Figure 12 shows a multi-dimensional graphical representation of another parameter representative of a wear state at one location of the edge of the cutting tool, obtained by an acoustic measurement of a gradient of machining vibration.
Figure 13 shows a multi-dimensional graphical representation of another parameter representative of a wear state at one location of the edge of the cutting tool, obtained by an electrical measurement of a gradient of a machining power of the manufacturing system.

### DETAILED DESCRIPTION OF EXAMPLE EMBODIMENTS

The disclosure is directed to a method for manufacturing an ophthalmic device comprising at least one machining step, in particular a cutting step also called a surfacing step.

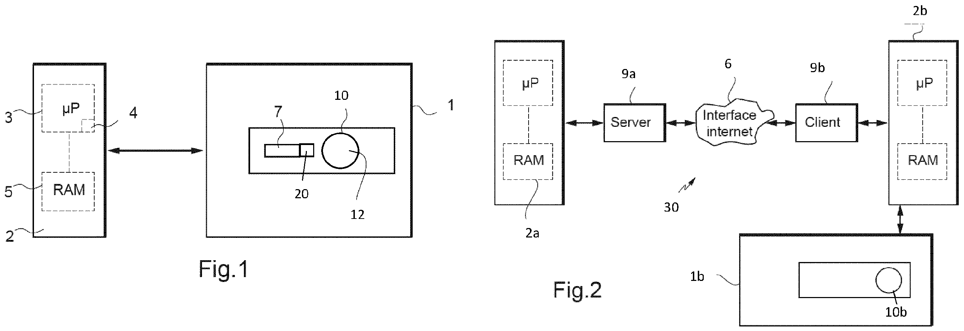

Figure 1 illustrates a manufacturing system configured to carry out at least a machining step of at least one desired surface on a part which is either an ophthalmic device 10 or a mold into which such an ophthalmic device is intended to be mold. Such a mold can be used for instance for manufacturing a semi-finished lens or a finished lens.

The term ophthalmic device will be used for designating either a lens blank, semi-finished lens, finished lens and mold.

The system comprises a manufacturing machine 1 and system parts generally formed by at least one command and control unit 2 configured to communicate with a data processing system (or control unit) of the machine 1 and configured to run a computer program having instructions configured to implement at least the machining step of the method, when said computer program is run by a computer.

The machine 1 is here a numerical-control "free-form" turning machine 1, numerical control denoting the set of equipment and software, the function of which is to give movement instructions to all the elements of the machine 1.

The machine 1 comprises a moveable machining arm 7 on which is mounted a cutting tool 20 provided with a cutting edge, and a data processing system or a control unit (not shown) configured for controlling the arm 7 and thus the cutting tool 20.

The machine 1 is configured for machining by turning and/or surfacing the desired surface on at least one face 12 of the ophthalmic device 10.

The command and control unit 2 comprises a microprocessor 3 having a memory 4, in particular a non-volatile memory, allowing it to load and store the computer program, also called software, which when it is executed in the microprocessor 3, allows the implementation of method according to the disclosure.

This non-volatile memory 4 is for example of the ROM ("read only memory") type.

The command and control unit 2 further comprises a memory 5, in particular a volatile memory, allowing data to be stored during the execution of the software and the implementation of the method.

This volatile memory 5 is for example of the RAM or EEPROM type (respectively "random access memory" and "electrically erasable programmable read only memory").

The command and control unit may be only at least partially integrated into the machine. In other words, the control unit may be arranged in part, or in whole, outside the machine.

The command and control unit can form at least partially a part of the machine and may comprise one or a plurality of command and control modules located inside and/or outside the machine.

The ophthalmic device 10 can be an ophthalmic lens and/or a checking piece. In the case where the part which is machined is not a mold but directly the ophthalmic lens, the machine 1 can also be configured for polishing the faces and/or for edging a peripheral edge. For instance, the machine 1 can be configured for roughing and next finishing the face(s) in order to form the ophthalmic lens.

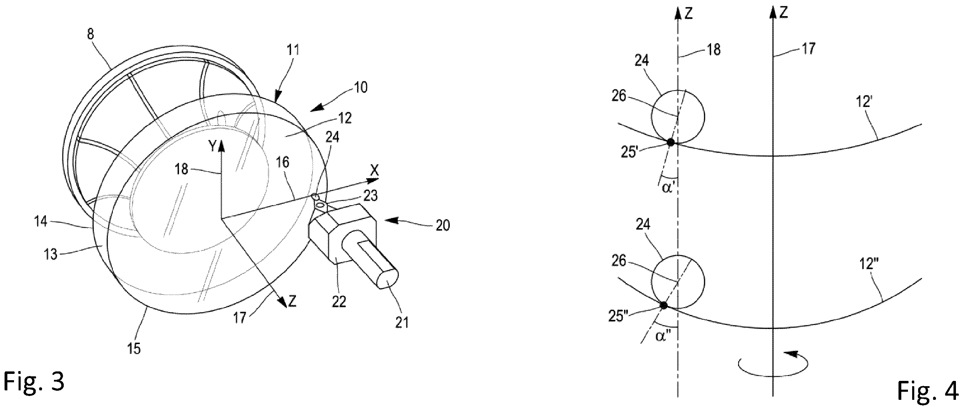

The machining tool 10 is here for instance a diamond turning tool (see in detail in reference to Figures 3 and 4).

The command and control unit 2 is configured to command and control at least some of the steps of the manufacturing method described below.

Figure 2 shows a client-server communication interface 30 comprising for instance a so-called supplier side 9a and another, so-called client side 9b, and these two sides communicating via an internet interface 6.

The supplier side comprises a server 9a linked to a data processing system or a command and control unit 2a of the same type as that in Figure 1, this server 9a being configured to communicate with the internet interface 6.

The client side 9b is configured to communicate with the internet interface 6, and is linked to a data processing system or a command and control unit 2b of the same type as that of the supplier side.

Furthermore, the command and control unit 2b on the client-side is linked to a manufacturing machine 1b of the same type as that in Figure 1 for manufacturing at least the first face of an ophthalmic device 10b.

For instance, the command and control unit 2b on the client-side is configured for receiving by a user some parameters about the ophthalmic device to be machined, and/or about the cutting tool, and/or about the manufacturing method intended to be implemented for machining the ophthalmic device.

For instance, the parameters about the ophthalmic device 10b may include data such as geometrical characteristics and/or optical function of a desired ophthalmic surface intended to be manufactured and/or at least one information representative of intrinsic parameter, such as index, of material of the part to be machined.

For instance, the parameters about the cutting tool used to machine the desired surface can be a parameter representative of a wear state of at least one location of the edge of the cutting tool.

For instance, the parameters about manufacturing method intended to be implemented can be a machining strategy selected between at least one of a first order to machine the desired surface with the cutting tool and a second order not to machine the desired surface with the cutting tool.

The command and control unit 2b on the client-side, using the internet 6 interface and server 9a, sends the data received to the command and control unit 2a on the supplier-side for the determination of the manufacturing file and operational parameters.

If the command and control unit 2b on the client-side receives some parameters about the ophthalmic device to be machined and/or about the cutting tool, the command and control unit 2a on the supplier-side executes the computer program that it contains in order to implement for instance the step of determination of the machining strategy as a function of both the desired surface and the parameter representative of the wear state.

Using the server 9a and the internet interface 6, the command and control unit 2a on the supplier-side sends the manufacturing file and operational parameters, in particular the machining strategy, to the command and control unit 2b on the client side.

The command and control unit 2b on the client side is here configured to execute software for implementing the other steps of the method for manufacturing the part by using the manufacturing file and operational parameters, in particular the machining strategy in order to machine or not the desired surface on the part which is either the ophthalmic device or the mold into which such an ophthalmic device is intended to be molded, thanks to the manufacturing system 1b.

In variant, the manufacturing system can be located on the supplier side so that the command and control unit 2a on the supplier side is configured both to determine the machining strategy and to machine or not the desired surface on the part which is either the ophthalmic device or the mold into which such an ophthalmic device is intended to be molded.

In reference to Figures 3 and 4, the part to be machined is here an ophthalmic device comprising the face which is here the upper face 12, a lower face 11 opposite to the upper face 12 and a peripheral edge 13 linking the lower and upper faces 11 and 12.

For instance, the upper face 12 is configured to form a first face, also named rear face and the lower face 11 is configured to form a second face, also named front face. The second face is opposite to the first face.

The peripheral edge 13 is configured to form a peripheral outline having a first junction 15 linking the peripheral edge 13 to the first face 12 and a second junction 14 linking the peripheral edge 13 to the second face 11.

The part to be machined is here maintained by an holding system 8, such as a blocker, mounted in the machine.

The holding system 8 may comprise for instance an adhesive film (not represented) which has an adhesive face configured to be fixed on the lower face 11; or can use another system such as alloy and/or clamping device.

The holding system 8 is configured to be mounted on a spindle axis (not represented) of the machine, and the spindle axis rotates during machining so that the ophthalmic device 10 rotates on itself during machining.

The machine comprises three directions, respectively a first direction 16, namely X-direction, a second direction 18 perpendicular to the first direction 16, namely Y direction, and a third direction 17 perpendicular both to the first and second directions 16 and 18, namely Z-direction.

The location of the cutting tool 20 is defined according to the first, second and third directions 16 to 18 in the machine.

The Z-direction 17 corresponds here to a turning axis, also named turning center or rotating axis, of the ophthalmic device 10.

The cutting tool 20 here comprises a pin 21 configured to be fastened to the moveable machining arm, a base 22 from which protrudes the pin 21, a tool support 23 formed by a projection of the base 22, at the opposite of the pin 21, and a diamond tool 24, or end tool, fixed to the tool support 23.

The diamond tool 24 may be of the half-radius type or of the full-radius type and has generally a predetermined aperture (in degrees).

A diamond tool of a full-radius type may be mounted on the cutting tool 20 so that the diamond tool 24 is inclined relative to the tool support 23 in order to form a tool having an aperture arranged asymmetrically.

The aperture asymmetry arrangement can be defined according to a plan comprising the turning axis 17 (or Z-direction), the Y-direction 18 and a tool center.

Figure 4 partially and schematically depicts two contact angles α', α" of the cutting tool at two different contact points 25' and 25" and helps to define a contact point and a contact angle on a location of the edge of the diamond tool 24.

The upper drawing is related to a surface 12' with a low curvature, while the bottom drawing is related to another surface 12" with a high curvature.

On these drawings, the turning axis 17 in the Z direction, also called rotation axis, is also represented, and a parallel axis of the rotation axis 18 in Z direction is represented to help the understanding.

The diamond tool 24 is schematically represented by a circular shape. The contact points 25' and 25" are the contact points between the tool and the respective surface 12' and 12".

The tool angle α', α" is defined as the angle between the rotation axis 17, 18 and the axis passing through a reference point 26 of the diamond tool 24 and the contact point 25', 25".

As the axis 17 and 18 are parallel, the angles are the same between the axis 18 or between the axis 17.

The reference point may be the center of the diamond tool or any other points of the tool if it remains the same for each contact point in the referential of the diamond tool.

As shown, the contact angle depends on the position of the contact point.

Consequently, the contact angle may depend on the curvature of the surface and/or the location of the diamond tool on the surface.

In the rest of the description, the term cutting tool is equated to the diamond tool.

The actual final step of surface generating in Rx Labs is a turning operation with the cutting tool. At the beginning, this cutting tool may be approximately considered circular, having for instance a radius from 30µm to 12mm, preferentially 2 to 5 mm, based on the specification provided by the manufacturer of the cutting tool.

During turning, also called surfacing or cutting, the contact point between the ophthalmic device and the cutting tool is moving along that circular part. It results in a non-equal state of wear along the tool radius depending on the surface to be obtained.

Tool circularity defect is replicated to the cut surface and can lead to local or global surface defects like wrong optical power design, rings and center defects on the lens or the semi-finished lens machined. Similar defects could be generated on the semi-finished mold surface. It may cause wrong optical power design on the lens.

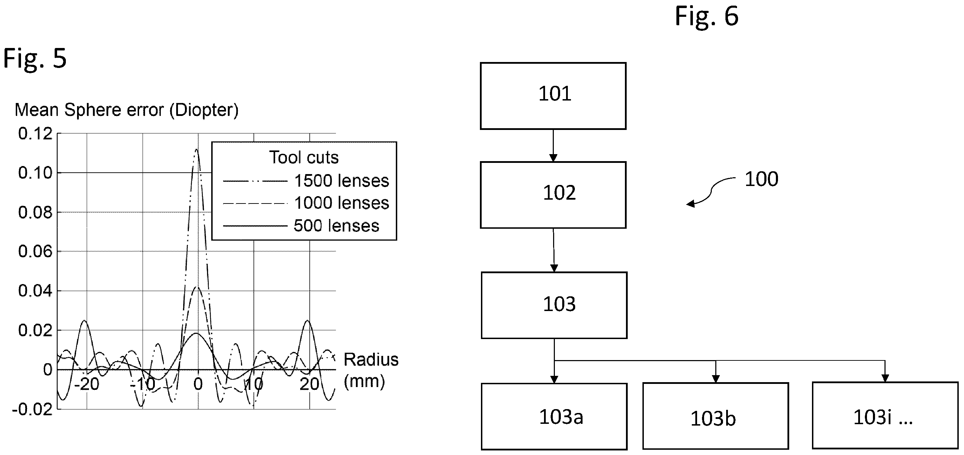

The above mentioned defects are illustrated on Figure 5, which shows mean sphere errors, in diopter, along a radius of a machined ophthalmic device according to a predetermined reference surface, and depending on number of lenses cut which are representative of the wear of the cutting tool at a determined location of the edge thereof.

Figure 5 clearly shows that a surface power defect in the center of the ophthalmic increases, where radius equal to 0 mm, when the number of machined devices raises. The defects are also representatives of so-called ring defects.

It is to be noted that the surface power defect and/or the ring defects may be representative of a part of a global optical power error, including also other errors such as positioning errors and curvature errors.

Figure 6 shows the main steps of the method 100 for manufacturing desired surfaces on ophthalmic devices, which is carried out by the manufacturing system and/or the client-server communication interface described above in reference to Figures 1 and 2.

The method comprises a step 101 of providing data representative of at least one desired surface to be machined on the ophthalmic device, at least as a function of the optical power to be provided thereof.

For instance, the data representative of at least one desired surface to be machined on the ophthalmic device can be geometrical characteristics and/or optical function and/or material index.

The method comprises a step 102 of providing at least one parameter representative of the wear state of at least one location of the edge of the cutting tool configured to machine the at least one desired surface of the ophthalmic device.

The method comprises a step 103 of determining the machining strategy as a function of both the at least one desired surface received in step 101 and the at least one parameter representative of the wear state received in step 102.

The machining strategy can be selected between at least one of:
- a first order 103a to machine the at least one desired surface with the cutting too:
- a second order 103b not to machine the at least one desired surface with the cutting tool; and when the second order is selected,
   - a third order to 103i to change the cutting tool:
   - a fourth order 103i to select another desired surface to be machined on the same ophthalmic device or on another ophthalmic device;
   - a fifth order 103i to machine the desired surface thanks to a selected machining device amongst a plurality of machining devices.

The machining strategy may be determined according to at least one parameter of the ophthalmic device on which the desired surface is to be machined, amongst a material parameter, a curvature parameter, an optical power parameter, a diameter parameter, and a thickness parameter.

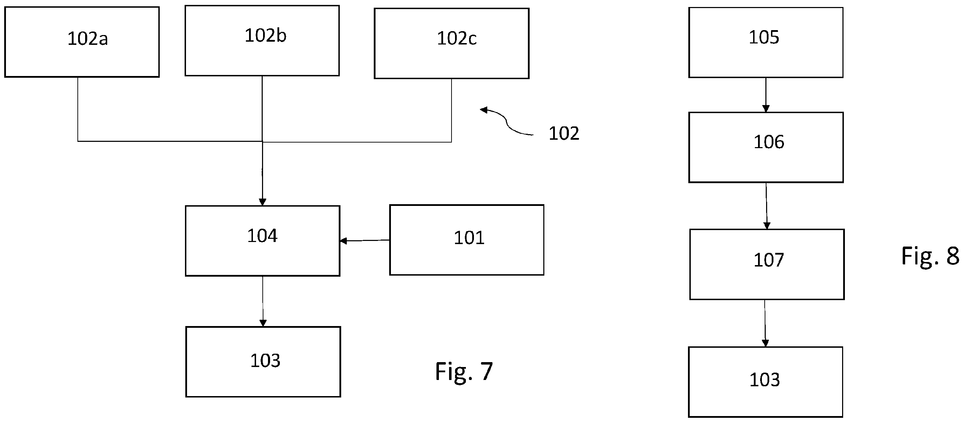

Figure 7 shows in more detail the step 102 of providing at least one parameter representative of the wear state of at least one location of the edge of the cutting tool, which may comprise:
- a step 102a of providing a geometrical parameter of the cutting tool at the location of the edge; and/or
- a step 102b of providing a machining vibration parameter of the machining device when the cutting tool is used; and/or
- a step 102c of providing a machining electrical parametern such as power, intensity and/or energy, of the machining device when the cutting tool is used.

In each case, the parameters are representative, directly or indirectly, of the wear state at locations of the edge of the cutting tool and are thus in a referential of the cutting tool.

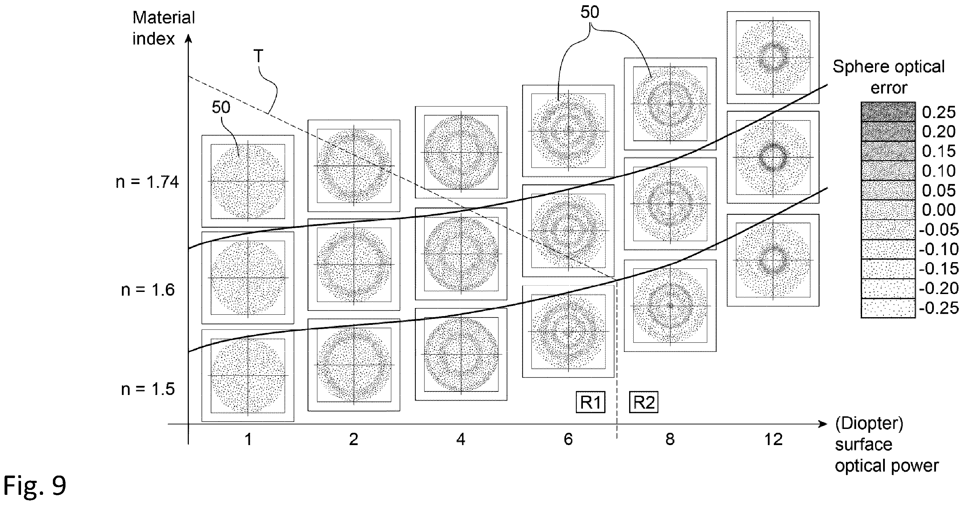

In step 102a, the parameter representative of the wear state may be obtained by measurement of a waviness on a predetermined reference surface machined (see Figure 9).

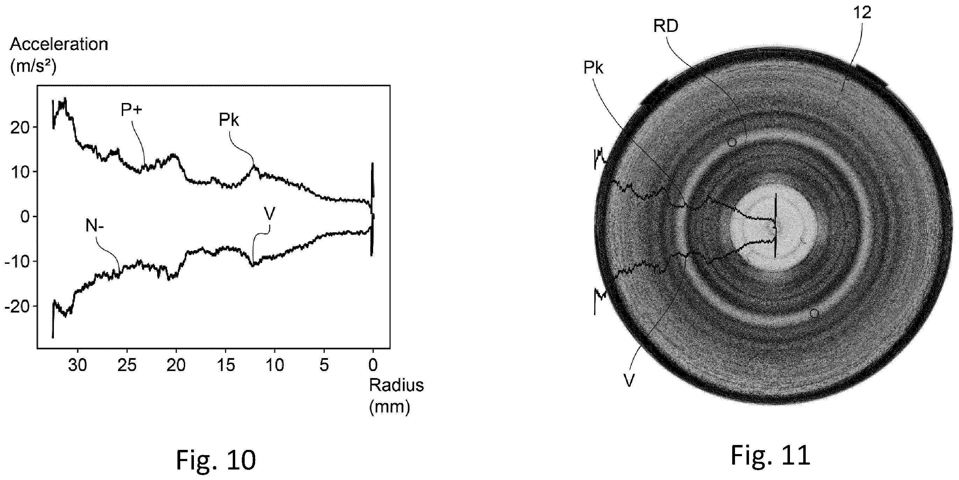

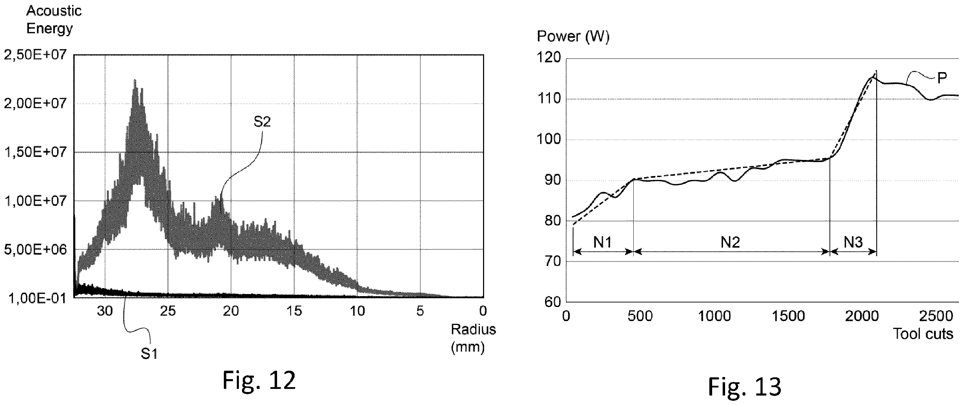

In step 102b, the parameter representative of the wear state may be obtained by accelerometer measurement of a gradient of machining vibration (see Figures 10 and 11), or by acoustic measurement of a gradient of machining vibration (see Figure 12).

In step 102c, the parameter representative of the wear state may be obtained by electrical measurement of a gradient of a machining power (see Figure 13).

It is also possible to take into account of the estimated number or the actual number of desired surfaces already machined with the cutting tool.

Next, the method may comprise a step 104 of providing, or determining, at least one optical power error map characterized at least as a function of both the desired surface received by step 101 and the parameter(s) representative of the wear state received by steps 102a-c.

Next, the method may comprise the step 103 of determining the machining strategy as a function of the at least one optical power error map received or determined in step 104.

The at least one optical power error map may be representative of a predetermined reference surface and/or a predetermined material index and/or a base curvature.

The at least one optical power error map may be characterized by a surface power defect at least at a location corresponding to a center of a predetermined reference surface, as illustrated in Figure 5, and/or by a ring defect at least around the center of the predetermined reference surface (see Figure 9).

Figure 8 shows further steps of the method according to another embodiment, including a step 105 of providing a plurality of optical power error maps arranged in a machining domain, a step 106 of locating the at least one desired surface to be machined in the machining domain, a step 107 of comparing the at least one desired surface to be machined to a respective predetermined reference surface and next the step 103 of determining the machining strategy as a result of the comparison.

Such a machining domain is graphically illustrated on Figure 9.

The machining domain is determined as a function of the optical power on the surface which is machined, in diopter, here the back surface, and of material indicia, noted n.

Each of the optical power error maps 50 is, as explained above, is representative of a predetermined reference surface for a predetermined material index and for a base curvature, or average curvature; so that the optical power error maps are distributed on regions on the machining domain.

Each of the optical power error maps 50 is also a transcription of the surface power defects shown on Figure 5, such as sphere optical errors, which defects are illustrated as rings around the center of the predetermined reference surface.

In the example shown on Figure 9, the machining domain includes a quality tolerance threshold T illustrated as a dotted line and which separates a first region R1 defining acceptable optical power error maps and a second region R2 defining unacceptable optical power error maps, both first and second regions R1 and R2 thus depending of the wear state at location(s) of the edge of the cutting tool.

The machining strategy can be determined as a function of such a machining domain after having located, as explained above in reference to Figure 8, the desired surface to be machined in the machining domain.

For instance, if for a desired surface, the corresponding optical power error map is in the first region R1, the determined machining strategy can be to machine the desired surface with the cutting tool; while if for the same desired surface, the corresponding optical power error map is in the second region R2, the determined machining strategy can be not to machine the desired surface with the cutting tool and also to change the cutting tool and/or to select another desired surface to be machined on another ophthalmic device.

The order to change the cutting tool can be replacing the cutting tool by another cutting tool, or selecting in the same machine another cutting tool.

Figures 10 and 11 show a graphical representation of another parameter representative of a wear state at one location of the edge of the cutting tool obtained in particular by an accelerometer measurement of the gradient of machining vibration.

Figure 10 shows a signal measured by an accelerometer sensor, including positive P+ and negative N- factors, during machining a desired surface, and Figure 11 is a corresponding representation on what one can equate to an optical power error map, showing that some peaks Pk and valleys V may appear on the signal when a ring defect RD is generated by the cutting tool on the machined surface 12.

To be noted that the signal at the center of the surface (on the right of the graph) is not representative when the cutting tool starts or stops the cutting.

Figure 12 shows a graphical representation of another parameter representative of a wear state at one location of the edge of the cutting tool obtained in particular by an acoustic measurement of the gradient of machining vibration.

In particular, Figure 12 shows that signals measured by an acoustic sensor mounted on the cutting tool, or on the holding device, for a worn tool and for a new tool.

It can be seen that the acoustic energy signal S1 for the new tool is substantially linear and stable from the center to the outline of the surface (from the right to the left on the graph), except in the close vicinity of the outline; while the acoustic signal S2 for the worn tool is no linear and is not stable from the center to the outline of the surface.

The signals S1 and S2 can thus reflect acceptable or unacceptable defects on the machined surfaces as explained above, for instance on the basis of a vibration threshold.

Figures 13 shows a graphical representation of another parameter representative of a wear state at one location of the edge of the cutting tool obtained in particular by an electrical measurement of a gradient of a machining power of the manufacturing system.

In particular, Figure 13 shows a signal P measured by a power measuring device, or a current measuring device, depending on the number Ni of lenses cut which are representative of the wear of the cutting tool at a determined location of the edge thereof.

In particular, Figure 13 shows that the electrical power P increases substantially during a first number N1 of machined surfaces, then the electrical power P increases slowly during a second number N2 of machined surfaces, N2 being greater than N1, and next the electrical power P increases highly during a third number N3 of machined surfaces.

The signal P can thus also reflect acceptable or unacceptable defects on the machined surfaces as explained above, for instance on the basis of an electrical power threshold.

It is to be noted that the manufacturing system can comprise one or several machining devices as described above, and/or at least one of the machining device may be configured to machine several desired surfaces simultaneously or sequentially on a single support or on several supports.

In this respect, the machining strategy may comprises the fourth order to select another desired surface to be machined on the same ophthalmic device or on another ophthalmic device and/or the fifth order to machine the desired surface thanks to a selected machining device amongst the plurality of machining devices.

Thanks to the method according to the disclosure, it is possible to allow or not to allow at least one desired surface to be machined, depending on the at least one parameter of the wear state of at least one location of the edge of the cutting tool, taking into account of the desired surface itself.

The method according to the disclosure can thus be equated to a preventive method which takes into account the desired surface to be machined, the estimate or actual wear state at least one location of the edge of the cutting tool, thanks to at least one dedicated parameter, and a potential negative effect of the machining of the desired surface with the cutting tool, represented by defects estimated on the optical power error map.

The preventive role of the method according to the disclosure can be very convenient to manage the machining strategy, as a function of the estimate or actual wear state of at least one location of the edge of the cutting tool in combination with the desired surfaces to be machined.

For instance, it is possible to identify a risk of being out of quality tolerance if one desired surface is machined with the cutting tool while another desired surface to be machine would be in line with the quality tolerance.

Therefore, the method could for instance determine a machining strategy according to which a second order not to machine the one desired surface with the cutting tool would be delivered and a subsequent first order to machine the another desired surface with the cutting tool would be delivered.

In other words, it is possible to allow or not to allow at least one desired surface to be machined, depending on both the at least one parameter of the wear state of at least one location of the edge of the cutting tool and of a predictive optical power error that could be generated on the ophthalmic device, taking into account of the desired surface itself.

The potential negative effect of the machining of the desired surface with the cutting tool can thus be represented by defect illustrated on the optical power error map.

The risk of being out of quality tolerance if one desired surface is machined with the cutting tool while another desired surface to be machine would be in line with the quality tolerance, can be identified thanks to a comparison of the desired surface to be machined to the optical power error map.

In other words, the method according to the disclosure may allow to adapt the ophthalmic devices production in a dedicated plant, such as a lab.

In addition to manage the machining strategy as a function of the quality tolerance, the method according to the disclosure may also be convenient to raise the lifespan of the cutting tool, versus the lab productivity.

As explained above, it is to be noted that the method according to the disclosure can be carried out in combination, or sequentially, with a tool wear compensation method taken into account the surface irregularity of the machined surface, such as the method described in French patent FR 2 984 197 from the Applicant, and/or with another tool wear compensation method developed also by the Applicant and which takes into account irregularities of the cutting tool itself due to the non-equal state of wear thereof.

In particular, it may be to consider the cutting tool when calculating the surface description data intended to be loaded into the surfacing machine circular part. Tool position is recalculated to compensate for the effect of the cutting tool. The tool position recalculated may be X or Y position, preferentially the Z tool position or combination of X/Y/Z positions or any other kind of liberty degree position. The solution is based on the computation of a compensation map of the position of the cutting tool. A compensated surface description data represents a surface of an ophthalmic device to be obtained by machining with the cutting tool and the compensated surface description data is used. The compensated surface description data depends on the cutting tool and on the contact point of the cutting tools.

For instance, the method comprises providing a surface description data, the surface description data representing the surface of the ophthalmic device; providing contact data from the surface description data, the contact data representing the contact points to obtain with the cutting tool the surface represented by the surface description data, the contact point being the contact point between the cutting tool and the surface of the blank to obtain the surface of the optical element, and the contact point being defined in the cutting tool coordinate system; generating the compensation map by using a transfer function, the input of the transfer function being at least the contact data and the output of the transfer function being the compensation map; determining the compensated surface description data from the generated compensation map and the surface description data.

The step of generating a compensation map may comprise providing the material description data, the material description data representing the material of the cutting tool and/or the material of the blank and/or the interaction between the material of the ophthalmic device and of the cutting tool during the cutting thereof to obtain the desired surface, determining the transfer function based at least on the provided material description data.

The step of generating the compensation map may further comprise providing a reference element description data, the reference element data representing the surface of an element previously cut by the cutting tool, determining the transfer function based at least on the provided reference element description data; and/or providing a predictive model, the predictive model predicting the wear of the cutting tool in given conditions, determining the transfer function based at least on the predicted wear of the cutting tool.

The predictive model can be a trained machine learning.

The step of generating a compensation map may further comprise providing the cutting speed and/or the cutting depth at each contact point; determining the transfer function based at least on the provided cutting speed.

The so called tool wear compensation methods are "curative" methods whereas the method according to the present disclosure is a "preventive" method, thus allowing to carry out an accurate solution for managing both the cutting tool lifetime and the ophthalmic devices production workflow.

It should be noted more generally that the disclosure is not limited to the examples described and represented.

## Claims

1. Method for manufacturing by machining an ophthalmic device (10), comprising:
- providing (101) data representative of at least one desired surface to be machined on the ophthalmic device, at least as a function of an optical power;
- providing (102) at least one parameter representative of a wear state of at least one location of an edge of a cutting tool configured to machine the at least one desired surface of the ophthalmic device;
- determining (103) a machining strategy as a function of both the at least one desired surface and the at least one parameter representative of the wear state ;
the machining strategy being selected between at least one of a first order (103a) to machine the at least one desired surface with the cutting tool and a second order (103b) not to machine the at least one desired surface with the cutting tool.

2. Method according to claim 1, wherein the at least one parameter representative of the wear state is a geometrical parameter, and/or a machining electrical parameter and/or a machining vibration parameter.

3. Method according to claim 2, wherein the at least one parameter representative of the wear state is obtained by measurement of a waviness on a predetermined reference surface and/or by a number of desired surfaces machined, and/or by electrical measurement of a gradient of a machining power and/or by accelerometer measurement or acoustic measurement of a gradient of machining vibration.

4. Method according to any one of claims 1 to 3, comprising providing (105) at least one error map (50) characterized at least as a function of both the at least one desired surface and the at least one parameter representative of the wear state and determining the machining strategy as a function of the at least one error map.

5. Method according to claim 4, wherein the at least one error map (50) is representative of a predetermined reference surface and/or a predetermined material index and/or a base curvature, and the at least one error map is **characterized by** a surface power defect at least at a location corresponding to a center of a predetermined reference surface and/or by a ring defect at least around the center of the predetermined reference surface.

6. Method according to one of claims 4 and 5, comprising providing (50) a plurality of error maps (50) arranged in a machining domain, locating (106) the at least one desired surface to be machined in the machining domain, comparing (107) the at least one desired surface to be machined to a respective predetermined reference surface and determining (103) the machining strategy as a result of the comparison.

7. Method according to claim 6, wherein the machining domain includes at least one first region (R1) defining acceptable error maps (50) and at least one second region (R2) defining unacceptable error maps, both first and second regions depending at least of the wear state of at least one location of the edge of the cutting tool.

8. Method according to claim 7, wherein the at least one first region (R1) and the at least one second region (R2) are separated by at least one quality tolerance threshold (T).

9. Method according to any one of claims 1 to 8, wherein the machining strategy is determined according to at least one parameter of the ophthalmic device on which the desired surface is to be machined, amongst a material parameter, a curvature parameter, an optical power parameter, a diameter parameter, and a thickness parameter.

10. Method according to any one of claims 1 to 9, wherein the machining strategy comprises a third order to change the cutting tool and/or a fourth order to select another desired surface to be machined and/or a fifth order to machine the desired surface thanks to a selected machining device amongst a plurality of machining devices, and when the second order is selected, at least one amongst the third, fourth and fifth orders is also selected.

11. A command and control unit including system elements configured to run a computer program in order to manufacture by machining an ophthalmic device, by implementing: providing data representative of at least one desired surface to be machined on the ophthalmic device, at least as a function of an optical power; providing at least one parameter representative of a wear state of at least one location of an edge of a cutting tool configured to machine the at least one desired surface of the ophthalmic device; determining a machining strategy as a function of both the at least one desired surface and the at least one parameter representative of the wear state; the machining strategy being selected between at least one of a first order to machine the at least one desired surface with the cutting tool and a second order not to machine the at least one desired surface with the cutting tool.

12. A manufacturing system comprising at least one machining device having at least one cutting tool, and a command and control unit, the system being configured for manufacturing by machining an ophthalmic device, by providing data representative of at least one desired surface to be machined on the ophthalmic device, at least as a function of an optical power; providing at least one parameter representative of a wear state of at least one location of an edge of a cutting tool configured to machine the at least one desired surface of the ophthalmic device; determining a machining strategy as a function of both the at least one desired surface and the at least one parameter representative of the wear state; the machining strategy being selected between at least one of a first order to machine the at least one desired surface with the cutting tool and a second order not to machine the at least one desired surface with the cutting tool.

13. Manufacturing system according to claim 12, wherein it comprises a plurality of machining devices and the machining strategy comprises a third order to change the cutting tool and/or a fourth order to select another desired surface to be machined and/or a fifth order to machine the desired surface thanks to a selected machining device amongst the plurality of machining devices, and when the second order is selected, at least one amongst the third, fourth and fifth orders is also selected.

14. A computer program including instructions configured to manufacture by machining an ophthalmic device, by implementing: providing data representative of at least one desired surface to be machined on the ophthalmic device, at least as a function of an optical power; providing at least one parameter representative of a wear state of at least one location of an edge of a cutting tool configured to machine the at least one desired surface of the ophthalmic device; determining a machining strategy as a function of both the at least one desired surface and the at least one parameter representative of the wear state; the machining strategy being selected between at least one of a first order to machine the at least one desired surface with the cutting tool and a second order not to machine the at least one desired surface with the cutting tool, when said computer program is run by a computer.

15. A client-server communication interface for transferring to a remote computer at least manufacturing data for manufacturing by machining an ophthalmic device, such as a file manufacturing including a machining strategy, which are determined by a computer program, when said computer program is run in a command and control unit, which is configured to implement: providing data representative of at least one desired surface to be machined on the ophthalmic device, at least as a function of an optical power; providing at least one parameter representative of a wear state of at least one location of an edge of a cutting tool configured to machine the at least one desired surface of the ophthalmic device; determining a machining strategy as a function of both the at least one desired surface and the at least one parameter representative of the wear state; the machining strategy being selected between at least one of a first order to machine the at least one desired surface with the cutting tool and a second order not to machine the at least one desired surface with the cutting tool, and the remote computer being configured to implement the machining or not according to the machining strategy.
